# EUROPÄISCHE PATENTANMELDUNG

(11) **EP 2 629 548 A2**
(43) Veröffentlichungstag der Anmeldung: **21.08.2013**
(21) Anmeldenummer: 13450003.2
(22) Anmeldetag: 17.01.2013
(51) Int. Cl.: H04Q 9/00

(54) **Vorrichtung zur Erfassung und Übertragung von Messdaten**

(30) Priorität: 16.02.2012 AT 1962012
(71) Anmelder: EVVA Sicherheitstechnologie GmbH, 1120 Wien (AT)
(72) Erfinder: Reinhard, Enne J., 1120 Wien (AT)
(74) Vertreter: Keschmann, Marc

(57) **Zusammenfassung**

Bei einer Vorrichtung zur Erfassung und Übertragung von Messdaten umfassend eine Messdatenerfassungseinheit mit einem Datenübertragungsmodul zum Übertragen von Messdaten an eine Leseeinrichtung ist das Datenübertragungsmodul als wenigstens eine Koppelelektrode aufweisendes kapazitives Datenübertragungsmodul ausgebildet, sodass die Datenübermittlung über eine kapazitive Kopplung zwischen der Messdatenerfassungseinheit und der Leseeinrichtung erfolgen kann.

## Beschreibung

Die Erfindung betrifft eine Vorrichtung zur Erfassung und Übertragung von Messdaten umfassend eine Messdatenerfassungseinheit mit einem Datenübertragungsmodul zum Übertragen von Messdaten an eine Leseeinrichtung.

Die Erfindung betrifft weiters ein System zur Erfassung und Übertragung von Messdaten umfassend eine Messdatenerfassungseinheit und eine Lese- und/oder Schreibeinheit.

In der Messtechnik versteht man unter Datenerfassung die Aufnahme analoger Signale mittels geeigneter Hardware. Hierbei werden mit Hilfe eines Analog-digital-Umsetzers digitale Messdaten erzeugt, die dann mittels einer geeigneten Lesevorrichtung sofort ausgelesen oder für ein späteres Auslesen in einem Speicher der Messdatenerfassungseinheit gespeichert werden. Neben der unidirektionalen Messdatenauslesung unterstützen manche Messdatenerfassungseinheiten auch die Möglichkeit einer bidirektionalen Datenübertragung, bei welcher zusätzlich Daten von einer Lese- und/oder Schreibeinheit in die Messdatenerfassungseinheit geschrieben werden, z.B. für Programmierungszwecke oder um komplexere Datenübertragungsprotokolle zu realisieren. Komplexere Datenübertragungsprotokolle können beispielsweise kryptographische Funktionen ermöglichen, insbesondere eine verschlüsselte Datenübertragung und/oder eine gegenseitige Authentifizierung.

Die vorliegende Erfindung bezieht sich insbesondere auf Messdatenerfassungseinheiten, die am Ort der Messdatenerfassung verbaut sind. Solche Messdatenerfassungseinheiten können sich an schwer zugänglichen Stellen befinden, sodass das händische Auslesen der Messdaten erschwert wird. Es sind daher schon Systeme zur drahtlosen Datenübertragung zwischen der Messdatenerfassungseinheit und der Lese- und/oder Schreibeinheit bekannt geworden. Nachteilig bei den herkömmlichen drahtlosen Datenübertragungssystemen ist allerdings, dass die Vertraulichkeit und die Manipulationssicherheit der Daten nicht immer gewährleistet ist.

Der Erfindung liegt daher die Aufgabe zugrunde, die Datenübertragung zwischen einer Messdatenerfassungseinheit und einer zugehörigen Lese- und/oder Schreibeinheit dahingehend zu verbessern, dass die Vertraulichkeit und die Manipulationssicherheit der Daten gewährleistet ist.

Zur Lösung dieser Aufgabe sieht die Erfindung bei einer Vorrichtung und bei einem System der eingangs genannten Art im Wesentlichen vor, dass das Datenübertragungsmodul als wenigstens eine Koppelelektrode aufweisendes kapazitives Datenübertragungsmodul ausgebildet ist, sodass die Datenübermittlung über eine kapazitive Kopplung zwischen der Messdatenerfassungseinheit und der Lese- und/oder Schreibeinheit erfolgen kann. Die kapazitive Datenübertragung hat den Vorteil, dass die Übertragung lediglich über relativ geringe Distanzen funktioniert, sodass es für das Übertragen von Daten erforderlich ist, die Lese- und/oder Schreibeinheit an die Messdatenerfassungseinheit anzunähern oder die Messdatenerfassungseinheit oder einen leitend mit dieser verbundenen Bauteil mit der Lese- und/oder Schreibeinheit sogar zu berühren. Aufgrund der beschränkten Reichweite wird die Gefahr eines Abfangens oder Manipulierens der Messdaten während der Übertragung durch unbefugte Personen verringert.

Für die Realisierung der kapazitiven Datenübertragung weist das Datenübertragungsmodul der Messdatenerfassungseinheit und der Lese- und/oder Schreibeinheit jeweils eine Koppelelektrode mit einer zugehörige Koppelkapazität für eine kapazitive Signalaus- bzw. -einkopplung auf. Beispielsweise ist die Koppelelektrode als eine leitende Fläche, insbesondere eine Kupferfläche oder metallische Fläche ausgebildet. Eine derartige Ausbildung der Datenübertragungsmodule ermöglicht eine Datenübertragung ohne eine galvanische Verbindung. Beide Komponenten, d.h. die Messdatenerfassungseinheit und die Lese- und/oder Schreibeinheit, sind bevorzugt jeweils geerdet. Über die Erdkapazitäten der Messdatenerfassungseinheit und der Lese- und/oder Schreibeinheit kann der Stromkreis geschlossen werden. Alternativ oder zusätzlich kann der Stromkreis durch eine direkte kapazitive Kopplung zwischen den Masse-Elektroden geschlossen werden.

Die kapazitive Datenübertragung funktioniert hierbei bevorzugt so, dass das Datenübertragungsmodul der Messdatenerfassungseinheit Mittel zur Erzeugung eines kapazitiven Nahfelds aufweist, über welches die Messdaten ausgesendet werden, sodass sich bei Berührung der Messdatenerfassungseinheit oder bei Annäherung an die Messdatenerfassungseinheit durch die Lese- und/oder Schreibeinheit ein Wechselstromkreis schließt und ein elektrischer Fluss entsteht, der von dem Datenübertragungsmodul der Lese- und/oder Schreibeinheit erfasst werden kann.

Um die bei der kapazitiven Kopplung auftretenden schwachen Ströme zu erfassen, ist es vorteilhaft, entsprechend hochohmige Empfängerschaltungen zu verwenden, welche trotzdem eine hohe Verstärkung besitzen. Nachteilig bei der kapazitiven Datenübertragung ist hierbei, dass keine standardisierten Bauteile für den Einsatz in Datenübertragungsmodulen von Messdatenerfassungssystemen zur Verfügung stehen, mit denen die kapazitive Datenübertragung in einfacher und kostengünstiger Weise realisiert werden kann. Dies ist insbesondere damit zu erklären, dass die Nutzung von kapazitiven Datenübertragungssystemen bisher nur in sehr begrenztem Ausmaß kommerziell verfügbar gemacht wurde, sodass sich die Entwicklung von Großserienmodellen von Datenübertragungsmodulen bisher nicht gelohnt hat. Im Rahmen der Erfindung soll daher eine Möglichkeit gefunden werden, mit der die kapazitive Datenübertragung auch bei Messdatenerfassungssystemen in einfacher und kostengünstiger Weise baulich realisiert werden kann, wobei es insbesondere wünschenswert wäre, wenn möglichst kleinbauende bzw. miniaturisierte Datenübertragungsmodule zur Verfügung stehen würden.

Die Erfindung sieht in diesem Zusammenhang bevorzugt vor, dass das kapazitive Datenübertragungsmodul der Messdatenerfassungseinheit und/oder der Lese- und/oder Schreibeinheit einen für die induktive Datenübertragung ausgebildeten RFID-Datenübertragungs-Mikrochip oder einen Rundfunkempfangs-Mikrochip umfasst, an dessen Antennenanschluss die wenigstens eine Koppelelektrode angeschlossen ist.

Es wurde somit überraschenderweise gefunden, dass Mikrochips, die nicht für die Verwendung bei der kapazitiven Datenübertragung konzipiert wurden, sich für den Einsatz als Empfangs- und/oder Sendebaustein im kapazitiv arbeitenden Datenübertragungsmodul eines Messdatenerfassungssystems eignen. Dabei ist es von besonderem Vorteil, dass die zum Einsatz gelangenden RFID-Mikrochips und Rundfunk-Empfangschips in überaus großen Mengen zu sehr geringen Kosten allgemein verfügbar sind. Die mit diesen Mikrochips erzielte Miniaturisierung des Datenübertragungsmoduls erlaubt außerdem den Einbau kleinbauender Messdatenerfassungseinheiten, wobei insbesondere auch eine Nachrüstung bestehender Messdatenerfassungseinheiten ohne weiteres möglich ist.

Bei der kapazitiven Datenübertragung fungiert wenigstens eine Koppelelektrode oder eine Koppelkapazität als "Antenne". Bevorzugt wird die wenigstens eine Koppelelektrode oder eine Koppelkapazität an die für die Empfangs- bzw. Sendespule vorgesehenen Anschlüsse des RFID-Mikrochips oder an die für die Dipolantenne vorgesehenen Anschlüsse des Rundfunkempfangs-Mikrochips angeschlossen. In bestimmten Fällen kann es dabei erforderlich sein, dass die Koppelelektrode über ein Anpassnetzwerk für die Impedanzanpassung an den Mikrochip angeschlossen ist.

Bei den eingesetzten RFID-Mikrochips handelt es sich um solche, die als Lese-Schreib-Interface für die induktive Datenübertragung konzipiert sind. Solche RFID-Mikrochips werden millionenfach in Leseeinrichtungen für RFID-Transponder in Anwendungen für die automatische Identifizierung und Lokalisierung von Gegenständen verwendet. Bevorzugt ist vorgesehen, dass der RFID-Datenübertragungs-Mikrochip für die Datenübertragung nach ISO/IEC 14443 oder ISO/IEC 15693 ausgebildet ist.

Bei RFID Mikrochips gibt es verschiedene Betriebsmodi, nämlich den Peer-to-Peer-Modus (ISO 18092), den Reader/Writer-Modus (ISO 14443) und den Card-Emulation-Modus. Am häufigsten genützt wird der Reader-/Writer-Modus, der eine Kommunikation mit passiven RFID-Transpondern ermöglicht. Passive RFID-Transponder zeichnen sich dadurch aus, dass sie keine eigene Stromversorgung aufweisen, sondern dass sie die zur Kommunikation und zur Abarbeitung interner Prozesse benötigte Energie ausschließlich aus dem Feld der Schreib-/Leseeinheit beziehen. Beim Peer-to-Peer-Modus hingegen können sowohl der Sender als auch der Empfänger aktiv kommunizieren (ISO 18092, aktiver Modus). Im Rahmen der Erfindung ist bevorzugt, dass ein Peer-to-Peer-Modus des RFID Datenübertragungs-Mikrochips eingestellt ist.

Bei der kapazitiven Datenübertragung kann die Übertragung der Daten sowohl berührungslos als auch kontaktbehaftet erfolgen. Im Datenübertragungsmodul der Messdatenerfassungseinheit werden die zu übertragenden Signale bevorzugt auf ein Trägersignal aufmoduliert und im Datenübertragungsmodul der Lese- und/-oder Schreibeinheit werden die Signale wieder demoduliert. Der beschriebene Vorgang kann in äquivalenter Weise für die Datenübertragung von der Lese- und/-oder Schreibeinheit an die Messdatenerfassungseinheit vorgesehen sein. Die Modulation des Trägersignals kann grundsätzlich in beliebiger Weise erfolgen. Bevorzugt ist in diesem Zusammenhang vorgesehen, dass der RFID-Datenübertragungs-Mikrochip einen Amplitudenmodulator/-demodulator oder eine Amplitudenumtastung umfasst. Weiters ist es bevorzugt, wenn der RFID-Datenübertragungs-Mikrochip für eine Datenübertragung in den ISM-Frequenzbändern, insbesondere in den Frequenzbändern von 13,553 bis 13,567 MHz, aber auch 6,765 - 6,795 MHz oder 26,957 - 27,283 MHz, ausgebildet ist.

Ein bevorzugtes Beispiel für RFID-Mikrochips, die vielfach erprobt und kostengünstig verfügbar sind, ist der Chip des Typs PN512 der Firma NXP B.V. oder TRF7970A der Firma Texas Instruments.

Bei den bevorzugt vorgesehenen Rundfunk-Empfangschips handelt es sich beispielsweise um Mikrochips, wie sie in Mobiltelefonen oder Miniatur-Radios eingesetzt werden. Hierbei kann beispielsweise vorgesehen sein, dass der Rundfunk-Empfangschip für den Empfang über Ultrakurzwelle oder Kurzwelle ausgebildet ist. Als besonders geeignet hat sich ein Rundfunk-Empfangschip des Typs Si4734 der Firma Silicon Labs herausgestellt.

Eine bevorzugte Ausbildung sieht hierbei vor, dass der Rundfunk-Empfangschip einen AM-Demodulator für den Kurzwellenbereich umfasst.

Die für die kapazitive Datenübertragung verwendete Koppelelektrode des Datenübertragungsmoduls kann an einer Außenfläche eines Gehäuses der Messdatenerfassungseinheit bzw. der Lese- und/oder Schreibeinheit angeordnet sein. Bevorzugt ist die Koppelelektrode als leitende Beschichtung ausgebildet.

Die Messdatenerfassungseinheit weist einen Sensor auf, mit der die zu messende analoge Größe erfasst wird. Der Sensor kann hierbei beispielsweise zur Erfassung einer Durchflussgeschwindigkeit, Wärmemenge, Temperatur, Lösungskonzentration (z.B. Zuckergehalt, Alkoholgehalt, Säuregehalt) oder eines Drucks ausgebildet sein. Bevorzugt kommt eine Messdatenerfassungseinheit zum Einsatz, die Befestigungsmittel zum Befestigen der Messdatenerfassungseinheit an einem elektrisch leitenden Leitungsrohr umfasst. Dies ermöglicht es, den Sensor so anzuordnen, dass dieser in das Rohrinnere hineinragt oder mit dem Rohrinneren in Verbindung steht, wobei der Sensor z.B. vom zu messenden Medium umströmt wird. Die zu messenden Medien können fest (z.B. Kies), staubförmig (z.B. Mehl mit Luft), flüssig und/oder gasförmig sein.

Die Befestigung der Messdatenerfassungseinheit an einem Leitungsrohr ermöglicht eine einfache Ausgestaltung der kapazitiven Kopplung, bei der das Datenübertragungsmodul wenigstens eine weitere Koppelelektrode aufweist, die im am Leitungsrohr befestigten Zustand der Messdatenerfassungseinheit mit dem Leitungsrohr elektrisch verbunden ist. Die Datenübertragung kann hierbei unter Mitverwendung des elektrisch leitenden Leitungsrohres erfolgen. Eine besonders gute Kopplung ergibt sich hierbei, wenn, wie dies einer bevorzugten Weiterbildung entspricht, die Messdatenerfassungseinheit und die Lese- und/oder Schreibeinheit in Abstand voneinander an einem Leitungsrohr oder an zwei verschiedenen, elektrisch oder mittels kapazitiver Kopplung miteinander verbundenen Leitungsrohren befestigt sind.

Die Möglichkeit der Mitverwendung des elektrisch leitenden Leitungsrohres, auf dem die Messdatenerfassungseinheit angeordnet ist, im Rahmen der kapazitiven Kopplung ergibt eine Reihe von vorteilhaften Ausführungsformen. Gemäß einer ersten Ausführungsform ist vorgesehen, dass die Messdatenerfassungseinheit an einem Leitungsrohr befestigt ist, wobei eine erste Koppelelektrode der Messdatenerfassungseinheit am Gehäuse angeordnet und eine zweite Koppelelektrode elektrisch mit dem Leitungsrohr verbunden ist, und dass die Lese- und/oder Schreibeinheit eine dritte und eine vierte Koppelelektrode aufweist, wobei zur Datenübertragung eine kapazitive Koppelstrecke zwischen der ersten und der dritten Koppelelektrode und eine elektrische Verbindung oder eine kapazitive Koppelstrecke zwischen der vierten Koppelelektrode und dem Leitungsrohr vorgesehen sind.

Gemäß einer zweiten Ausführungsform ist vorgesehen, dass die Messdatenerfassungseinheit an einem Leitungsrohr befestigt ist, wobei eine erste Koppelelektrode der Messdatenerfassungseinheit am Gehäuse angeordnet und eine zweite Koppelelektrode elektrisch mit dem Leitungsrohr verbunden ist, und dass die Lese- und/oder Schreibeinheit an dem Leitungsrohr befestigt ist, wobei eine dritte Koppelelektrode der Lese- und/oder Schreibeinheit am Gehäuse und eine vierte Koppelelektrode elektrisch mit dem Leitungsrohr verbunden ist, wobei zur Datenübertragung eine kapazitive Koppelstrecke zwischen der ersten und der dritten Koppelelektrode und eine über das Leitungsrohr führende elektrische Verbindung zwischen der zweiten und der vierten Koppelelektrode vorgesehen sind.

Gemäß einer dritten Ausführungsform ist vorgesehen, dass die Messdatenerfassungseinheit an einem ersten Leitungsrohr befestigt ist, wobei eine erste Koppelelektrode der Messdatenerfassungseinheit am Gehäuse angeordnet und eine zweite Koppelelektrode elektrisch mit dem ersten Leitungsrohr verbunden ist, und dass die Lese- und/oder Schreibeinheit an einem zweiten Leitungsrohr befestigt ist, wobei eine dritte Koppelelektrode der Lese- und/oder Schreibeinheit am Gehäuse angeordnet und eine vierte Koppelelektrode elektrisch mit dem zweiten Leitungsrohr verbunden ist, wobei zur Datenübertragung eine kapazitive Koppelstrecke zwischen der ersten und der dritten Koppelelektrode und eine kapazitive Koppelstrecke zwischen dem ersten und dem zweiten Leitungsrohr vorgesehen sind.

Gemäß einer vierten Ausführungsform ist vorgesehen, dass die Messdatenerfassungseinheit an einem vorzugsweise nicht leitenden Leitungsrohr befestigt ist, wobei eine erste Koppelelektrode und eine zweite Koppelelektrode der Messdatenerfassungseinheit am Gehäuse angeordnet sind, und dass die Lese- und/oder Schreibeinheit an ihrem Gehäuse eine dritte und eine vierte Koppelelektrode aufweist, wobei die Koppelelektroden so angeordnet sind, dass die erste und die dritte Koppelelektrode und die zweite und die vierte Koppelelektrode in einer Lese- bzw. Schreibposition der Lese- und/oder Schreibeinheit jeweils gegenüberliegend angeordnet sind, wobei zur Datenübertragung eine kapazitive Koppelstrecke zwischen der ersten und der dritten Koppelelektrode und eine kapazitive Koppelstrecke zwischen der zweiten und der vierten Koppelelektrode vorgesehen sind.

Allgemein ist zu erwähnen, dass die Messdatenerfassungseinheit eine optische Anzeige aufweisen kann, auf der z.B. Messdaten oder Statusinformationen angezeigt werden können. Die Lese- und/oder Schreibeinheit kann lanzenförmig ausgebildet sein, damit der Benutzer leichter an die Messdatenerfassungseinheit herankommen kann. Die Lanzenspitze ist dabei vorteilhafterweise mit einer Koppelelektrode ausgestattet.

Um eine sichere Datenübertragung zu ermöglichen (z.B. Handshake oder Verschlüsselung), ist bevorzugt vorgesehen, dass sowohl die Messdatenerfassungseinheit als auch die Lese- und/oder Schreibeinheit Daten senden und empfangen können, sodass eine bidirektionale Datenübertragung stattfindet.

Die Lese- und/oder Schreibeinheit oder die Messdatenerfassungseinheit kann in einer weiteren bevorzugten Ausführung mit einem Energiewandler ausgestattet sein, welcher in der Lage ist, verschiedene Energieformen in elektrische Energie umwandeln, die für die Energieversorgung der Messdatenerfassungseinheit bzw. der Lese- und/oder Schreibeinheit herangezogen werden kann. Insbesondere können mechanische Vibrationen, Temperaturunterschiede, Umgebungslicht etc. in elektrische Energie umgewandelt werden.

Die Lese- und/oder Schreibeinheit kann eine Schnittstelle zur Datenweitergabe aufweisen. Diese Schnittstelle kann z.B. als LAN-, Wlan oder 6LoWPAN Schnittstelle oder als Schnittstelle für ein Mess-, Installations-, und Gebäudebussystem ausgebildet sein. Die Messdaten können in einer weiteren bevorzugten Ausführung in elektronischen Datenverarbeitungssystemen gespeichert und z.B. über einen eingeschränkten Zugriff vom Internet aus abgefragt werden.

Die Erfindung wird nachfolgend anhand eines in der Zeichnung dargestellten Ausführungsbeispiels näher erläutert. In dieser zeigen Fig. 1 eine erstes Ausführungsbeispiel des erfindungsgemäßen Datenübertragungssystems, Fig. 2 ein zweites Ausführungsbeispiel des erfindungsgemäßen Datenübertragungssystems, Fig. 3 eine als Lanze ausgebildete Lese- und/oder Schreibeinrichtung, Fig. 4 ein drittes Ausführungsbeispiel des erfindungsgemäßen Datenübertragungssystems, Fig. 5 ein viertes Ausführungsbeispiel des erfindungsgemäßen Datenübertragungssystems, Fig. 6 ein vereinfachtes Schaltbild eines Datenübertragungsmoduls mit einem RFID-Interface-Chip und zwei Koppelelektroden und Fig. 7 ein vereinfachtes Schaltbild eines Datenübertragungsmoduls mit einem Rundfunks-Empfangschip und zwei Koppelelektroden.

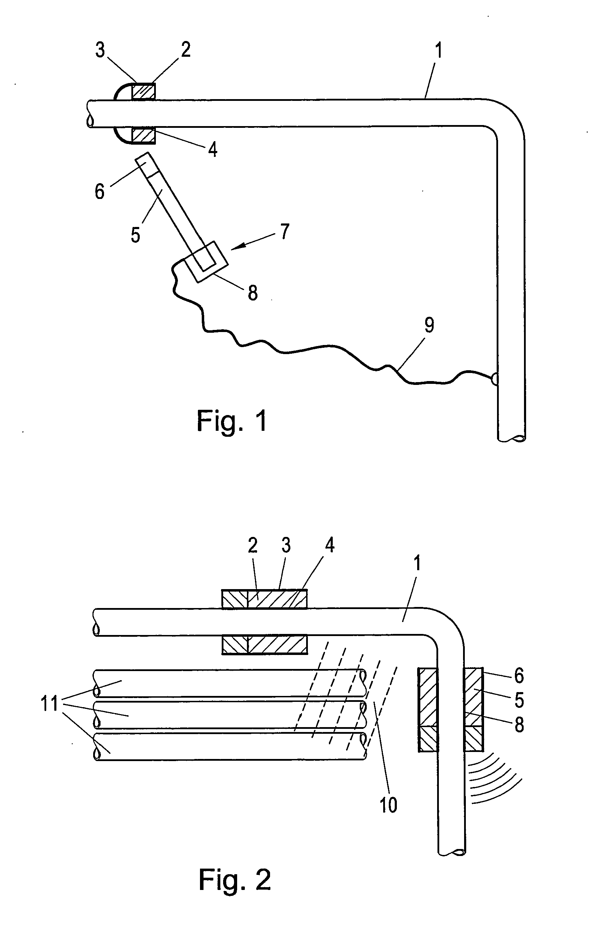

In Fig. 1 ist eine Leitungsrohr 1 dargestellt, welches von einem Medium durchflossen wird. Am Leitungsrohr 1 ist eine im Querschnitt ringförmig ausgebildete Messdatenerfassungseinheit 2 angebracht. Die Messdatenerfassungseinheit 2 ist so angeordnet, dass sie das Leitungsrohr 1 umgibt und das Leitungsrohr 1 mit ihrer Innenfläche berührt. Die Messdatenerfassungseinheit 2 umfasst einen Sensor, der geeignet ist, eine physikalische Größe des im Leitungsrohr 1 fließenden Mediums zu messen, wie beispielsweise eine Temperatur oder dergleichen. Die Messdatenerfassungseinheit 2 weist an ihrem Außenumfang wenigstens eine erste Elektrode 3 und an ihrem Innenumfang wenigstens eine zweite Elektrode 4 auf. Die zweite Elektrode 4 ist leitend mit dem elektrisch leitenden Leitungsrohr 1 verbunden. Die erste Elektrode 3 und die zweite Elektrode 4 sind bevorzugt jeweils zylindrisch ausgeführt.

Mit 5 ist eine Lese- und/oder Schreibeinheit bezeichnet, die zum Auslesen der von der Messdatenerfassungseinheit 2 zur Verfügung gestellten Messdaten dient. Die Lese- und/oder Schreibeinheit 5 ist lanzenförmig ausgebildet und weist ein erstes Ende mit einer dritten Elektrode 6 auf. Am gegenüberliegenden Ende weist die Lese- und/oder Schreibeinheit 5 einen Griffteil 7 auf, dessen Außenseite eine vierte Elektrode 8 trägt. Im Griffteil 7 ist die für den Lese- bzw. Schreibvorgang erforderliche Elektronik samt dem Datenübertragungsmodul integriert. Für den Lese- bzw. Schreibvorgang wird die lanzenförmige Lese- und/oder Schreibeinheit 5 mit der dritten Elektrode 6 an die an der Messdatenerfassungseinheit 2 ausgebildeten ersten Elektrode 3 herangeführt. Gegebenenfalls kann die dritte Elektrode 6 die erste Elektrode 3 hierbei berühren. Zwischen der ersten Elektrode 3 und der dritten Elektrode 6 bildet sich eine kapazitive Koppelstrecke aus, wobei der Signalrückschluss über eine Kopplung der zweiten Elektrode 4 mit der vierten Elektrode 8 erfolgt. Zu diesem Zweck kann die vierte Elektrode 8 mittels einer elektrisch leitenden Verbindung 9 mit dem Leitungsrohr 1 elektrisch verbunden sein. Alternativ kann zwischen der vierten Elektrode 8 und dem elektrisch leitenden Leitungsrohr 1 eine kapazitive Koppelstrecke ausgebildet werden.

Bei der Ausbildung gemäß Fig. 2 ist die Messdatenerfassungseinheit wiederum mit 2 und die Lese- und/oder Schreibeinheit mit 5 bezeichnet. Beide Einheiten 2, 5 sind im Querschnitt ringförmig ausgebildet und am Leitungsrohr 1 befestigt. Das Leitungsrohr 1 ist wiederum elektrisch leitend ausgebildet. Die Messdatenerfassungseinheit 2 weist an ihrer Außenoberfläche eine erste Elektrode 3 und an ihrer Innenoberfläche eine zweite Elektrode 4 auf. Die Lese- und/oder Schreibeinheit 5 weist an ihrer Außenoberfläche eine dritte Elektrode 6 und an ihrer Innenoberfläche eine vierte Elektrode 8 auf. Die Datenübertragung zwischen der Messdatenerfassungseinheit 2 und der Lese- und/oder Schreibeinheit 5 erfolgt nun dadurch, dass die zweite Elektrode 4 und die vierte Elektrode 8 über das Leitungsrohr 1 miteinander elektrisch verbunden sind und sich zwischen der ersten Elektrode 3 und der dritten Elektrode 6 eine kapazitive Koppelstrecke ausbildet, wie sie mit 10 angedeutet ist. Die kapazitive Koppelstrecke 10 kann ggf. unter Vermittlung von umliegenden elektrisch leitenden Strukturen wie beispielsweise weitere Leitungsrohre 11 erfolgen. Um die kapazitive Kopplung zu verbessern, weist die mit der ersten Koppelelektrode 3 ausgebildete Oberfläche der Messdatenerfassungseinheit 2 und/oder die mit der dritten Elektrode 6 ausgebildete äußere Oberfläche der Lese- und/oder Schreibeinheit 5 eine Oberflächenvergrößerung auf. Dadurch kann die Koppelkapazität erhöht werden.

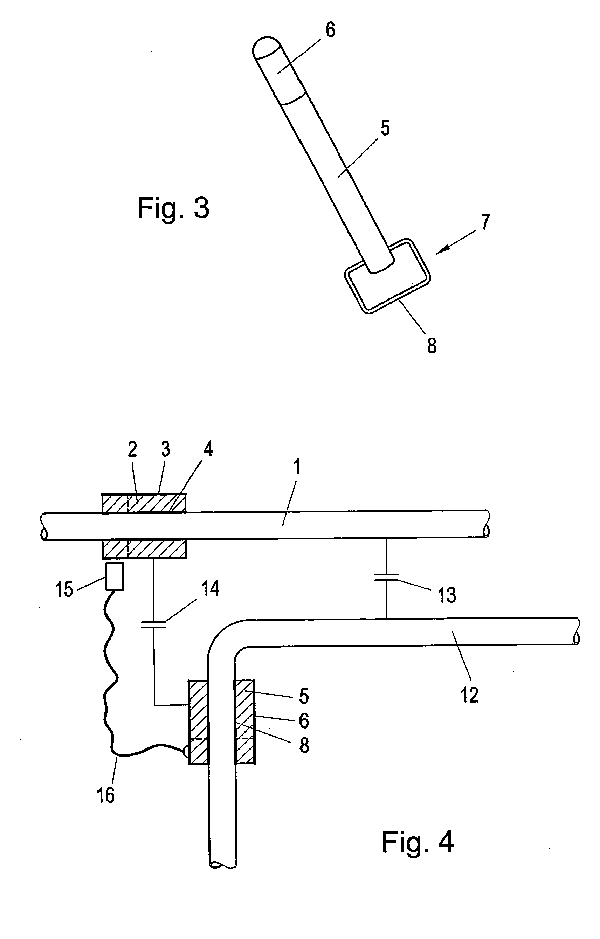

In Fig. 3 ist die in Fig. 1 schematisch dargestellte lanzenförmige Lese- und/oder Schreibeinheit 5 vergrößert dargestellt. Es ist ersichtlich, dass die lanzenförmige Einheit an ihrem einen Ende eine Messspitze mit einer dritten Elektrode 6 und ihrem anderen Ende eine in einem Haltegriff 7 integrierte Elektronikeinheit einschließlich des kapazitiven Datenübertragungsmoduls aufweist, das an seiner Außenoberfläche die vierte Koppelelektrode 8 trägt.

In Fig. 4 ist ein weiteres Ausführungsbeispiel dargestellt, bei dem ähnlich wie in Fig. 2 sowohl die Messdatenerfassungseinheit 2 als auch die Lese- und/oder Schreibeinheit 5 im Querschnitt ringförmig ausgebildet und an Leitungsrohren angeordnet sind. Im Unterschied zur Ausbildung gemäß Fig. 2 ist nun die Messdatenerfassungseinheit 2 an einem ersten Leitungsrohr 1 und die Lese- und/oder Schreibeinheit 5 an einem Leitungsrohr 12 befestigt. Die Leitungsrohre 1 und 12 sind nicht unmittelbar miteinander elektrisch leitend verbunden. Die Datenübertragung erfolgt derart, dass zwischen dem Leitungsrohr 1, mit welchem die zweite Elektrode 4 der Messdatenerfassungseinheit 2 elektrisch verbunden ist, und dem Leitungsrohr 12, mit welchem die vierte Elektrode 8 der Lese- und/oder Schreibeinheit 5 elektrisch verbunden ist, eine kapazitive Koppelstrecke 13 ausgebildet wird. Weiters bildet sich zwischen der ersten Koppelelektrode 3 und der dritten Koppelelektrode 6 eine kapazitive Koppelstrecke 14 aus. Erforderlichenfalls kann anstelle der kapazitiven Koppelstrecke 14 ein Lesekopf 15 zum Einsatz kommen, der mittels einer elektrisch leitenden Verbindung 16 mit der dritten Koppelelektrode 6 verbunden ist, wobei der Lesekopf 15 näher an die erste Koppelelektrode 3 herangeführt oder mit dieser verbunden werden kann, um die kapazitive Kopplung zu verbessern.

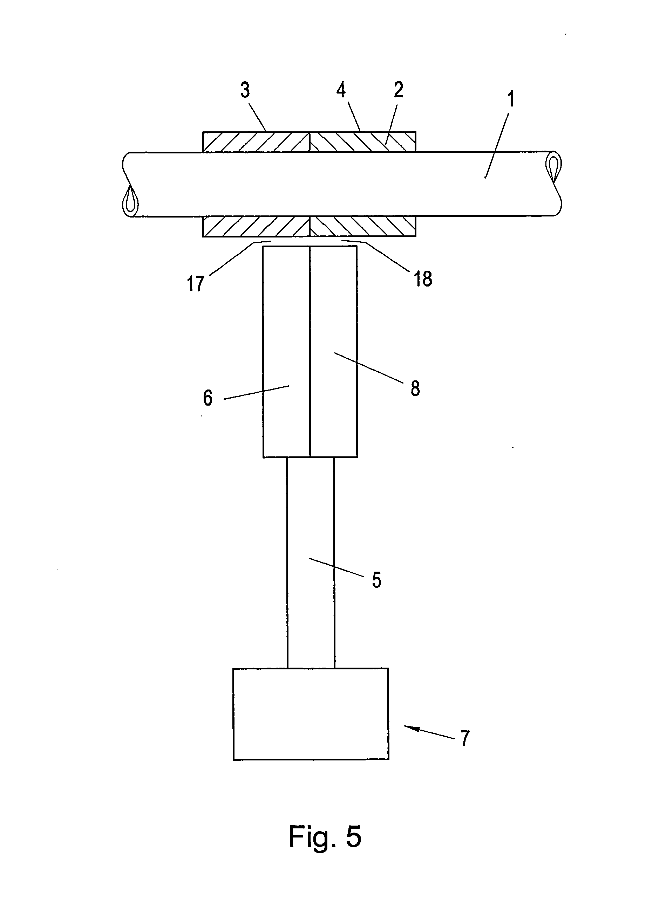

Bei der Ausbildung gemäß Fig. 5 ist die Messdatenerfassungseinheit 2 an einem nicht elektrisch leitenden Leitungsrohr 1 angeordnet. Die erste Koppelelektrode 3 und die zweite Koppelelektrode 4 sind beide voneinander elektrisch isoliert an der Außenoberfläche der Messdatenerfassungseinheit 2 angeordnet. Die erste und die zweite Koppelelektroden 3 bzw. 4 sind hierbei bevorzugt zylindrisch ausgebildet. Die Lese- und/oder Schreibeinheit 5 weist dementsprechend an der Messspitze eine dritte Koppelelektrode 6 und eine vierte Koppelelektrode 8 auf, wobei die Anordnung derart getroffen ist, dass die dritte Koppelelektrode 6 der ersten Koppelelektrode 3 und die vierte Koppelelektrode 8 der zweiten Koppelelektrode 4 zugeordnet ist, sodass sich zwischen der ersten Koppelelektrode 3 und der dritten Koppelelektrode 6 eine kapazitive Koppelstrecke 17 und zwischen der zweiten Koppelelektrode 4 und der vierten Koppelelektrode 8 eine kapazitive Koppelstrecke 18 ausbildet.

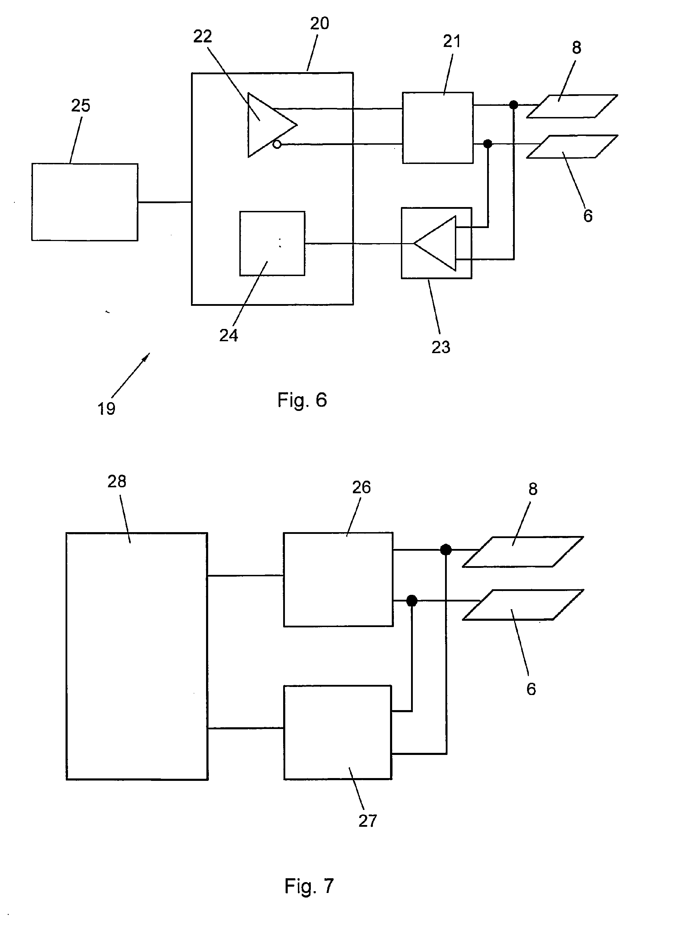

Fig. 6 zeigt ein vereinfachtes Schaltbild eines Datenübertragungsmoduls 19 der Lese- und/oder Schreibeinheit 5 mit einem für induktive Kopplung ausgelegten RFID-Interface-Chip 20 und zwei Koppelelektroden 6 und 8. Die Koppelelektroden 6, 8 sind über eine Anpassschaltung 21 mit dem Sendeteil 22 des RFID-Interface-Chips 20 und über einen Empfangsverstärker 23 mit dem Empfangsteil 24 des RFID-Interface-Chips 20 verbunden. Die OP-Verstärkerschaltung 23 ist bevorzugt mit hohem Eingangswiderstand realisiert. Die ggf. vorgesehene kryptographische Behandlung sowohl der Sende- als auch der Empfangsdaten erfolgt im RFID-Interface-Chip 20, mit dessen Hardware auch die Demodulation des Empfangsdatensignals realisiert ist. Der Mikrokontroller 25 steuert die verschiedenen Funktionen des RFID-Interface-Chips 20.

Bei der Ausbildung gemäß Fig. 7 sind die Koppelelektroden 6,8 an eine Sendeanpassschaltung 26 und einen Rundfunk-Empfangschip 27 angeschlossen. Hier wird die ggf. vorgesehene kryptographische Behandlung der Sende- und Empfangsdaten an den Mikrokontroller 28 delegiert, während Signalempfang und Demodulation vom Rundfunks-Empfangschip 27 im (bei der Initialisierung eingestellten) Kurzwellen-AM-Modus übernommen werden.

## Patentansprüche

1. Vorrichtung zur Erfassung und Übertragung von Messdaten umfassend eine Messdatenerfassungseinheit mit einem Datenübertragungsmodul zum Übertragen von Messdaten an eine Lese- und/oder Schreibeinheit, **dadurch gekennzeichnet, dass** das Datenübertragungsmodul als wenigstens eine Koppelelektrode aufweisendes kapazitives Datenübertragungsmodul ausgebildet ist, sodass die Datenübermittlung über eine kapazitive Kopplung zwischen der Messdatenerfassungseinheit und der Lese- und/oder Schreibeinheit erfolgen kann.

2. Vorrichtung nach Anspruch 1, **dadurch gekennzeichnet, dass** die Koppelelektrode an einer Außenfläche eines Gehäuses der Messdatenerfassungseinheit angeordnet ist.

3. Vorrichtung Anspruch 1 oder 2, **dadurch gekennzeichnet, dass** die Koppelelektrode als leitende Beschichtung ausgebildet ist.

4. Vorrichtung nach Anspruch 1, 2 oder 3, **dadurch gekennzeichnet, dass** die Messdatenerfassungseinheit Befestigungsmittel zum Befestigen der Messdatenerfassungseinheit an einem elektrisch leitenden Leitungsrohr umfasst.

5. Vorrichtung nach Anspruch 4, **dadurch gekennzeichnet, dass** das Datenübertragungsmodul wenigstens eine weitere Koppelelektrode aufweist, die im am Leitungsrohr befestigten Zustand der Messdatenerfassungseinheit mit dem Leitungsrohr elektrisch verbunden ist.

6. System zur Erfassung und Übertragung von Messdaten umfassend eine Messdatenerfassungseinheit nach einem der Ansprüche 1 bis 5 und eine Lese- und/oder Schreibeinheit, wobei die Messdatenerfassungseinheit und die Lese- und/oder Schreibeinheit jeweils ein eine Koppelelektrode aufweisendes kapazitives Datenübertragungsmodul umfassen, sodass die Datenübermittlung über eine kapazitive Kopplung zwischen der Messdatenerfassungseinheit und der Lese- und/oder Schreibeinheit erfolgen kann.

7. System nach Anspruch 6, **dadurch gekennzeichnet, dass** das Datenübertragungsmodul der Messdatenerfassungseinheit Mittel zur Erzeugung eines kapazitiven Nahfelds aufweist, über welches die Messdaten ausgesendet werden, sodass sich bei Berührung der Messdatenerfassungseinheit oder bei Annäherung an die Messdatenerfassungseinheit durch die Lese- und/oder Schreibeinheit ein Wechselstromkreis schließt und ein elektrischer Fluss entsteht, der von dem Datenübertragungsmodul der Lese- und/oder Schreibeinheit erfasst werden kann.

8. Vorrichtung oder System nach einem der Ansprüche 1 bis 7, **dadurch gekennzeichnet, dass** das kapazitive Datenübertragungsmodul der Messdatenerfassungseinheit und/oder der Lese- und/oder Schreibeinheit einen für die induktive Datenübertragung ausgebildeten RFID Datenübertragungs-Mikrochip oder einen Rundfunkempfangs-Mikrochip umfasst, an dessen Antennenanschluss die wenigstens eine Koppelelektrode angeschlossen ist.

9. Vorrichtung oder System nach Anspruch 8, **dadurch gekennzeichnet, dass** der RFID Datenübertragungs-Mikrochip für die Datenübertragung nach ISO/IEC 14443 oder ISO/IEC 15693 ausgebildet ist.

10. Vorrichtung oder System nach Anspruch 8 oder 9, **dadurch gekennzeichnet, dass** ein Peer-to-Peer-Modus des RFID Datenübertragungs-Mikrochips eingestellt ist.

11. Vorrichtung oder System nach Anspruch 8, 9 oder 10, **dadurch gekennzeichnet, dass** der RFID Datenübertragungs-Mikrochip einen Amplitudenmodulator/-demodulator oder eine Amplitudenumtastung umfasst.

12. Vorrichtung oder System nach einem der Ansprüche 8 bis 11, **dadurch gekennzeichnet, dass** der RFID Datenübertragungs-Mikrochip für eine Datenübertragung im Frequenzband 125 kHz oder in den ISM-Frequenzbändern, insbesondere in den Frequenzbändern 13,56 MHz, 6,78 MHz oder 27,12 MHz ausgebildet ist.

13. Vorrichtung oder System nach einem der Ansprüche 8 bis 12, **dadurch gekennzeichnet, dass** der RFID Datenübertragungs-Mikrochip ein Chip des Typs PN512 der Firma NXP B.V. oder TRF7970A der Firma Texas Instruments ist.

14. Vorrichtung oder System nach Anspruch 8, **dadurch gekennzeichnet, dass** der Rundfunk-Empfangschip für den Empfang über Ultrakurzwelle oder Kurzwelle ausgebildet ist.

15. Vorrichtung oder System nach Anspruch 14, **dadurch gekennzeichnet, dass** der Rundfunk-Empfangschip ein Chip des Typs Si4734 der Firma Silicon Labs ist.

16. Vorrichtung oder System nach Anspruch 14 oder 15, **dadurch gekennzeichnet, dass** der Rundfunk-Empfangschip einen Amplitudendemodulator umfasst.

17. System nach einem der Ansprüche 6 bis 16, **dadurch gekennzeichnet, dass** die Koppelelektrode der Lese- und/oder Schreibeinheit an einer Außenfläche eines Gehäuses der Lese- und/oder Schreibeinheit angeordnet ist.

18. System nach einem der Ansprüche 6 bis 17, **dadurch gekennzeichnet, dass** die Koppelelektrode der Lese- und/oder Schreibeinheit als leitende Beschichtung ausgebildet ist.

19. System nach einem der Ansprüche 6 bis 18, **dadurch gekennzeichnet, dass** die Lese- und/oder Schreibeinheit Befestigungsmittel zum Befestigen derselben an einem elektrisch leitenden Leitungsrohr umfasst.

20. System nach Anspruch 19, **dadurch gekennzeichnet, dass** das Datenübertragungsmodul wenigstens eine weitere Koppelelektrode aufweist, die im am Leitungsrohr befestigten Zustand der Lese- und/oder Schreibeinheit mit dem Leitungsrohr elektrisch verbunden ist.

21. System nach Anspruch 20, **dadurch gekennzeichnet, dass** die Messdatenerfassungseinheit und die Lese- und/oder Schreibeinheit in Abstand voneinander an einem Leitungsrohr oder an zwei verschiedenen, elektrisch oder mittels kapazitiver Kopplung miteinander verbundenen Leitungsrohren befestigt sind.

22. System nach einem der Ansprüche 6 bis 20, **dadurch gekennzeichnet, dass** die Messdatenerfassungseinheit an einem Leitungsrohr befestigt ist, wobei eine erste Koppelelektrode der Messdatenerfassungseinheit am Gehäuse und eine zweite Koppelelektrode elektrisch mit dem Leitungsrohr verbunden ist, und dass die Lese- und/oder Schreibeinheit eine dritte und eine vierte Koppelelektrode aufweist, wobei zur Datenübertragung eine kapazitive Koppelstrecke zwischen der ersten und der dritten Koppelelektrode und eine elektrische Verbindung oder eine kapazitive Koppelstrecke zwischen der vierten Koppelelektrode und dem Leitungsrohr vorgesehen sind.

23. System nach einem der Ansprüche 6 bis 20, **dadurch gekennzeichnet, dass** die Messdatenerfassungseinheit an einem Leitungsrohr befestigt ist, wobei eine erste Koppelelektrode der Messdatenerfassungseinheit am Gehäuse und eine zweite Koppelelektrode elektrisch mit dem Leitungsrohr verbunden ist, und dass die Lese- und/oder Schreibeinheit an dem Leitungsrohr befestigt ist, wobei eine dritte Koppelelektrode der Lese- und/oder Schreibeinheit am Gehäuse und eine vierte Koppelelektrode elektrisch mit dem Leitungsrohr verbunden ist, wobei zur Datenübertragung eine kapazitive Koppelstrecke zwischen der ersten und der dritten Koppelelektrode und eine über das Leitungsrohr führende elektrische Verbindung zwischen der zweiten und der vierten Koppelelektrode vorgesehen sind.

24. System nach einem der Ansprüche 6 bis 20, **dadurch gekennzeichnet, dass** die Messdatenerfassungseinheit an einem ersten Leitungsrohr befestigt ist, wobei eine erste Koppelelektrode der Messdatenerfassungseinheit am Gehäuse und eine zweite Koppelelektrode elektrisch mit dem ersten Leitungsrohr verbunden ist, und dass die Lese- und/oder Schreibeinheit an einem zweiten Leitungsrohr befestigt ist, wobei eine dritte Koppelelektrode der Lese- und/oder Schreibeinheit am Gehäuse und eine vierte Koppelelektrode elektrisch mit dem zweiten Leitungsrohr verbunden ist, wobei zur Datenübertragung eine kapazitive Koppelstrecke zwischen der ersten und der dritten Koppelelektrode und eine kapazitive Koppelstrecke zwischen dem ersten und dem zweiten Leitungsrohr vorgesehen sind.

25. System nach einem der Ansprüche 6 bis 20, **dadurch gekennzeichnet, dass** die Messdatenerfassungseinheit an einem vorzugsweise nicht leitenden Leitungsrohr befestigt ist, wobei eine erste Koppelelektrode und eine zweite Koppelelektrode der Messdatenerfassungseinheit am Gehäuse angeordnet sind, und dass die Lese- und/oder Schreibeinheit an ihrem Gehäuse eine dritte und eine vierte Koppelelektrode aufweist, wobei die Koppelelektroden so angeordnet sind, dass die erste und die dritte Koppelelektrode und die zweite und die vierte Koppelelektrode in einer Lese- bzw. Schreibposition der Lese- und/oder Schreibeinheit jeweils gegenüberliegend angeordnet sind, wobei zur Datenübertragung eine kapazitive Koppelstrecke zwischen der ersten und der dritten Koppelelektrode und eine kapazitive Koppelstrecke zwischen der zweiten und der vierten Koppelelektrode vorgesehen sind.
